# EUROPÄISCHE PATENTSCHRIFT

(11) **EP 0 791 942 B1**
(45) Veröffentlichungstag und Bekanntmachung des Hinweises auf die Patenterteilung: **24.03.2004**
(21) Anmeldenummer: 97100563.2
(22) Anmeldetag: 16.01.1997
(51) Int. Cl.: H01H 39/00, H01H 35/14, B60K 28/14, H01R 11/28

(54) **Bordnetz für Fahrzeuge**
Electric circuit for motor vehicle
Circuit électrique pour véhicule à moteur

(30) Priorität: 21.02.1996 DE 19606450
(43) Veröffentlichungstag der Anmeldung: 27.08.1997
(73) Patentinhaber: Bayerische Motoren Werke Aktiengesellschaft, 80788 München (DE)
(72) Erfinder: Albiez, Robert, 85084 Reichertshofen (DE); Gröbmair, Maximilian, 83623 Dietramszell (DE); Fahrnbauer, Bernhard, 80339 München (DE); Krappel, Alfred, 85737 Ismaning (DE)

(56) Entgegenhaltungen:
- EP-A- 0 639 844
- EP-A- 0 665 566
- DE-A- 4 305 819
- FR-A- 2 616 958

## Beschreibung

Die Erfindung bezieht sich auf ein Bordnetz mit den Merkmalen des Oberbegriffs vom Patentanspruch 1.

Ein derartiges Bordnetz ist aus der WO 95/21454 A bekannt. Dabei ist allein die Batterieleitung am Trennschalter angeschlossen. Einzelne Verbraucher sind unabhängig davon über einen separaten Anschluß am Energiespeicher angeschlossen. Diese Ausführung des Bordnetzes eignet sich für elektrische Verbraucher, die auch nach einem Unfall mit dem Energiespeicher verbunden sein sollen. Bedingt dadurch aber auch, daß alle Leitungen zu den Verbraucher über konventionelle Sicherungen geschützt werden müssen. Die Sicherungen unterbrechen die Stromversorgung nur bei tatsächlich auftretenden elektrischen Kurzschlüssen. Eine Abschaltung einzelner elektrischer Antriebe/Verbraucher infolge eines Unfalls erfolgt nicht.

Will man den vorhandenen Trennschalter nutzen um weitere elektrische Verbraucher bei einem aufgetretenen Ereignis von der Energiequelle zu trennen, könnten diese Verbraucher an der Batterieleitung angeschlossen werden. Dabei besteht aber auch bei Unterbrechen der Verbindung zum Energiespeicher durch den Trennschalter die Gefahr, daß der Generator auch nach einem Unfall weiterläuft und somit den Verbraucher über die mit der Batterieleitung elektrisch verbundenen Verbraucherleitung weiterhin mit elektrischer Energie versorgt.

Eine beabsichtigte Abschaltung der auf dieser speziellen Verbraucherleitung angeordneten elektrischen Verbraucher kann somit nicht sichergestellt werden.

Der Erfindung liegt die Aufgabe zugrunde, ein Bordnetz der eingangs genannten Art zu schaffen, bei dem im Falle eines Unfalls elektrische Verbraucher sicher von der elektrischen Energiezufuhr abgetrennt werden.

Die Erfindung löst diese Aufgabe durch die kennzeichnenden Merkmale des Patentanspruchs 1.

Im Normalfall besteht eine elektrische Verbindung zwischen Energiespeicher, Generator und Verbraucher. Der Trennschalter ist dabei nicht wirksam. Bei einem Unfall unterbricht der Trennschalter die Verbindung zwischen Energiespeicher und Batterieleitung. Gleichzeitig wird auch die Verbindung zwischen Energiespeicher, Batterieleitung zum Generator und Verbraucherleitung unterbrochen. Der Verbraucher ist damit vom Bordnetz abgetrennt und kann damit nicht mehr vom Generator oder von der Batterie mit elektrischer Energie versorgt werden. Damit sind dann Leitungen oder Verbraucher die besonders crashgefährdet sind, sicher von der Energiequelle getrennt. Beispielsweise könnte damit die gesamte Motorelektrik abgeschaltet werden und auf Sicherungen die als alleinigen Kurzschlußschutz im Crashfalle ausgelegt sind, verzichtet werden.

Die weiteren Patentansprüche beinhalten vorteilhafte konstruktive und elektrische Ausgestaltungen der Erfindung, die im folgenden anhand der Zeichnung weiter erläutert werden. Es zeigt
- Fig. 1: ein Prinzipschaltbild des erfindungsgemäßen Bordnetzes,
- Fig.2: eine erste konstruktive Ausgestaltung.

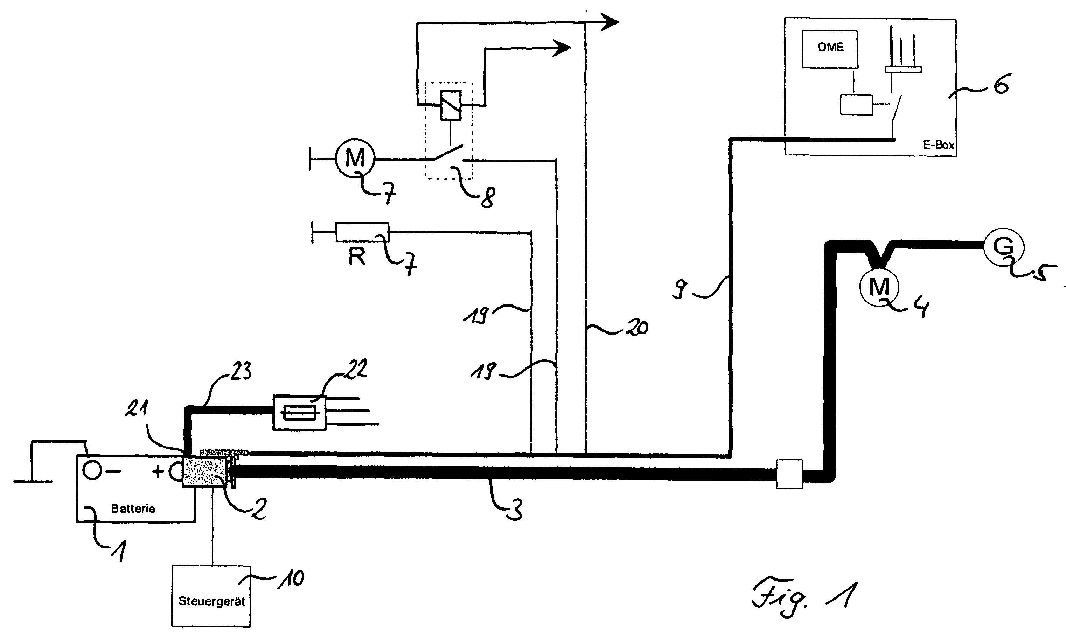

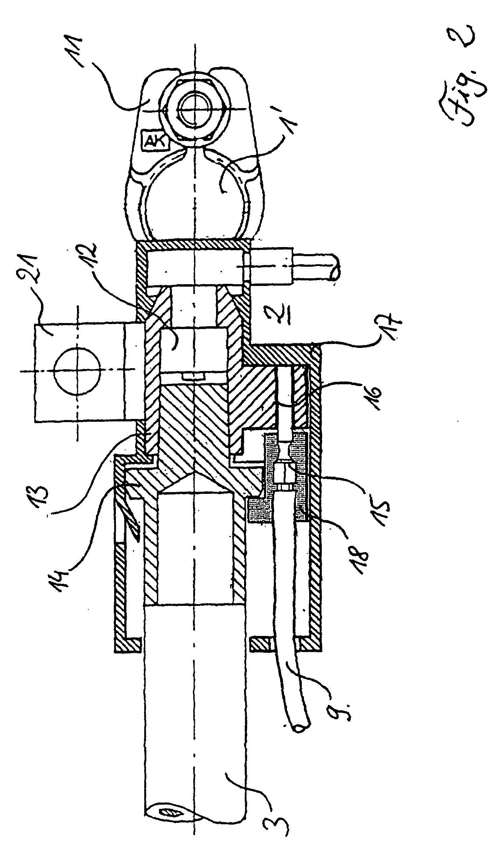

Das in Figur 1 dargestellte Bordnetz enthält einen Energiespeicher 1, einen an einem Batteriepol angeschlossenen Trennschalter 2 mit daran angeschlossenen Batterieleitung 3, die über einen Anlassermotor 4 zu einem Generator 5 führt. Eine nicht dargestellte Brennkraftmaschine ist über eine Motorelektronik 6 gesteuert. Femer steuert die Motorelektronik 6 auch den Betrieb einer elektrischen Kraftstoffpumpe 7 mittels eines Relais 8. Die Motorelektronik 6 ist über eine Verbraucherleitung 9 parallel zur Batterieleitung 3 über den Trennschalter 2 am Energiespeicher 1 angeschlossen. Nach einem Unfall wird der Trennschalter 2 beispielsweise durch ein Airbag-Steuergerät 10 ausgelöst und trennt die Batterieleitung 3 vom Energiespeicher 1 ab. Gleichzeitig wird die Verbraucherleitung 9 sowohl von der Batterie 1 als auch von der Batterieleitung 3 abgetrennt. Dies ist in Fig. 2 im Detail dargestellt. Der Trennschalter 2 sitzt über eine Kabelklemme 11 an einem Pol 1' der Batterie 1. Er besitzt einen Hilfsantrieb in Form eines Gasgenerators 12, der eine nicht im Detail dargestellte Klemmverbindung zwischen 2 Klemmteilen 13 und 14 unterbricht, in dem er das Klemmteil 14 aus dem Klemmteil 13 austreibt. Die am Klemmteil 14 angeschlagene Batterieleitung 3 wird damit vom Klemmteil 13 und damit dem Batteriepol 1' abgetrennt.

Die Verbraucherleitung 9 ist über einen Anschluß 15 mit einem Kontaktteil 16 verbunden, das in elektrisch leitende Verbindung mit dem Klemmteil 13 steht. Eine Kunststoff-Umhüllung 17 umgibt den Trennschalter 2 und reicht bis zum Anschluß 15. Im Bereich des Anschlusses ist ein Mitnehmer 16 ausgebildet.

Wird der Gasgenerator 12 gezündet, so wird, wie dargestellt, die Batterieleitung 3 abgeworfen. Der Mitnehmer 18 wird dabei gleichzeitig mit der Batterieleitung 3 bewegt. Dadurch wird der Anschluß 15/16 unterbrochen und die Verbraucherleitung 9 sowohl von der Batterieleitung als auch vom Batteriepol 1' getrennt. Es besteht dann keine elektrische Verbindung zwischen der Batterieleitung und der Verbraucheneitung 9. Die Motorelektronik 6 wird damit nicht mehr mit elektrischer Energie versorgt.

Alternativ ist es auch möglich, andere Verbraucher parallel oder anstelle der Motorelektronik 6 an der Verbraucherleitung 9 anzuschließen. Dabei sind verschiedene Ausführungen möglich und durch strichliiert dargestellte Leitungen angedeutet. Eine Möglichkeit besteht darin, die Stromversorgungsleitung 19 des Verbrauchers 7 an der Verbraucherleitung 9 anzuschließen. Eine andere Möglichkeit darin, die Steuerleitung 20 des Relais 8 anzuschließen. In jedem Fall ist sichergestellt, daß einem schweren Unfall der Verbraucher 7 sicher unterbrochen wird.

## Patentansprüche

1. Bordnetz, für Fahrzeuge, mit einer Batterieleitung (3) zum Verbinden eines Generators (5) mit einem Energiespeicher (1) und einem darin angeordneten, unfallbedingt betätigten Trennschalter (2) sowie eine Verbraucherleitung zum Anschließen weiterer Verbraucher am Energiespeicher, **dadurch gekennzeichnet, daß** der Trennschalter (2) derart ausgebildet ist, daß er zusätzlich zur Batterieleitung (3) auch die Verbraucherleitung (9) unterbricht und diese dabei auch von der Batterieleitung (3) abtrennt.

2. Bordnetz nach Anspruch 1, **dadurch gekennzeichnet, daß** der Trennschalter (2) einen Hilfsantrieb zum Unterbrechen der Batterieleitung aufweist und daß der Hilfsantrieb auch die Verbraucherleitung auftrennt.

3. Bordnetz nach Anspruch 1 oder 2, **dadurch gekennzeichnet, daß** die Batterieleitung gemeinsam mit der Verbraucherleitung befestigt ist und mit dieser durch den Hilfsantrieb abgeworfen wird.

4. Bordnetz nach einem der Ansprüche 1 bis 3, **dadurch gekennzeichnet, daß** der Trennschalter einen Isolationsmantel (17) besitzt, in dem ein Mitnehmer (18) für die Verbraucherleitung (9) ausgebildet ist.

5. Bordnetz nach Anspruch 4, **dadurch gekennzeichnet, daß** die Verbraucherleitung (9) an einem mit der Batterieleitung elektrisch leitend verbundenen Kontaktteil (16) angeschlossen ist.

## Claims

1. An on-board electrical system for vehicles, comprising a battery line (3) for connecting a generator (5) to an energy store (1), and a disconnection switch (2) actuated by an accident, arranged therein, and a load line for the connection of further loads to the energy store, **characterised in that** the disconnection switch (2) is designed in such a way that, in addition to the battery line (3), it also interrupts the load line (9) and in the process also disconnects it from the battery line (3).

2. An on-board electrical system according to claim 1, **characterised in that** the disconnection switch (2) has an auxiliary drive for interrupting the battery line and **in that** the auxiliary drive also disconnects the load line.

3. An on-board electrical system according to claim 1 or 2, **characterised in that** the battery line is fastened together with the load line and is released with the load line by the auxiliary drive.

4. An on-board electrical system according to any one of claims 1 to 3, **characterised in that** the disconnection switch has an insulation case (17), in which a driver (18) is formed for the load line (9).

5. An on-board electrical system according to claim 4, **characterised in that** the load line (9) is connected to a contact part (16) connected in an electrically conductive manner to the battery line.

## Revendications

1. Circuit électrique pour véhicules, comportant une ligne de batterie (3) permettant de relier un générateur (5) à un accumulateur (1) et un disjoncteur (2) disposé à l'intérieur et actionné en cas d'accident, ainsi qu'une ligne des consommateurs permettant de connecter d'autres consommateurs à l'accumulateur,
**caractérisé en ce que**
le disjoncteur (2) est configuré de telle sorte qu'il coupe la ligne de batterie (3) et également la ligne des consommateurs (9) qu'il sépare ainsi également de la ligne de batterie (3).

2. Circuit électrique selon la revendication 1,
**caractérisé en ce que**
le disjoncteur (2) présente un entraînement d'assistance pour la coupure de la ligne de batterie et l'entraînement d'assistance sépare également la ligne des consommateurs.

3. Circuit électrique selon la revendication 1 ou 2,
**caractérisé en ce que**
la ligne de batterie est fixée à la ligne des consommateurs et est détachée de celle-ci par le biais de l'entraînement d'assistance.

4. Circuit électrique selon l'une quelconque des revendications 1 à 3,
**caractérisé en ce que**
le disjoncteur possède un manteau isolant (17), dans lequel se trouve un élément d'entraînement (18) pour la ligne des consommateurs (9).

5. Circuit électrique selon la revendication 4,
**caractérisé en ce que**
la ligne des consommateurs (9) est raccordée à une pièce de contact (16) connectée de façon conductrice à la ligne de batterie.
